# EUROPEAN PATENT APPLICATION

(11) **EP 4 761 135 A1**
(43) Date of publication of application: **17.06.2026**
(21) Application number: 24862063.5
(22) Date of filing: 06.09.2024
(51) Int. Cl.: H04B 7/185

(54) **ADJUSTMENT METHOD FOR SATELLITE COMMUNICATION, AND COMPUTER-READABLE STORAGE MEDIUM AND MOBILE TERMINAL**

(30) Priority: 07.09.2023 CN 202311160601
(71) Applicant: ZTE CORPORATION, Shenzhen, Guangdong 518057 (CN)
(72) Inventor: SHEN, Shaowu, Shenzhen, Guangdong 518057 (CN); HU, Hailin, Shenzhen, Guangdong 518057 (CN)
(74) Representative: Pennacchio, Salvatore Giovanni
(86) International application number: PCT/CN2024/117343
(87) International publication number: WO 2025/051225

(57) **Abstract**

Provided in the embodiments of the present disclosure are a method for adjusting satellite communication, and a computer-readable storage medium and a mobile terminal. **The** method includes: acquiring a satellite communication parameter transmitted and received by a mobile terminal and movement state information of the mobile terminal; adjusting a satellite communication performance parameter of the mobile terminal according to the satellite communication parameter and the movement state information, and obtaining a transmission and receiving success rate and/or satellite communication quality; and performing closed-loop adjustment on the satellite communication performance parameter of the mobile terminal based on the transmission and receiving success rate and/or the satellite communication quality. **The** present disclosure solves the problem of poor communication quality caused by a mobile terminal during communication with a satellite, thereby achieving the effect of improving the satellite communication quality.

## Description

### Cross-Reference to Related Application

This disclosure is based upon and claims priority to Chinese Patent Application No. CN202311160601.4 filed on September 7, 2023 and entitled "Adjustment Method for Satellite Communication, and Computer-readable Storage Medium and Mobile Terminal", the disclosure of which is hereby incorporated by reference in its entirety.

### Technical Field

Embodiments of the present disclosure relate to the field of communications, and specifically to a method for adjusting satellite communication,, and a computer-readable storage medium and a mobile terminal.

### Background

With the introduction of the BeiDou Navigation Satellite System, as a satellite-based communication method, short message communication has the advantages of all-weather operation, global coverage, and high reliability, and thus is widely used in activities such as outdoor emergency rescue, environmental exploration, environmental monitoring, etc. However, during satellite communication, the movement state of a mobile terminal adversely affects communication quality, thus leading to poor communication quality.

### Summary

Embodiments of the present disclosure provide a method for adjusting satellite communication, and a computer-readable storage medium and a mobile terminal.

An embodiment of the present disclosure provides a method for adjusting satellite communication. The method is applied to a mobile terminal and includes the following operations.

A satellite communication parameter transmitted and received by a mobile terminal and movement state information of the mobile terminal are acquired.

A satellite communication performance parameter of the mobile terminal is adjusted according to the satellite communication parameter and the movement state information, and a transmission and receiving success rate and/or satellite communication quality are obtained.

Closed-loop adjustment is performed on the satellite communication performance parameter of the mobile terminal based on the transmission and receiving success rate and/or the satellite communication quality.

Another embodiment of the present disclosure further provides a computer-readable storage medium. The computer-readable storage medium stores a computer program. The computer program is configured to, when being run, implement steps in any one of the above method embodiments.

Another embodiment of the present disclosure further provides a mobile terminal. The mobile terminal includes a memory and a processor. The memory stores a computer program. The processor is configured to run the computer program to execute steps in any one of the above method embodiments.

### Brief Description of the Drawings

Fig. 1 is a block diagram of a hardware structure of a mobile terminal of a method for adjusting satellite communication according to an embodiment of the present disclosure.
Fig. 2 is a network architecture I operated according to an embodiment of the present disclosure.
Fig. 3 is a network architecture II operated according to an embodiment of the present disclosure.
Fig. 4 is a flowchart of a method for adjusting satellite communication according to an embodiment of the present disclosure.
Fig. 5 is a structural block diagram of an apparatus for adjusting satellite communication according to an embodiment of the present disclosure.
Fig. 6 is an operation schematic diagram I of a motion trajectory fitting adjustment module according to an embodiment of the present disclosure.
Fig. 7 is an operation schematic diagram II of a motion trajectory fitting adjustment module according to an embodiment of the present disclosure.
Fig. 8 is a diagram of changes in a satellite transceiver antenna and a satellite angle of a mobile terminal when the mobile terminal moves according to an embodiment of the present disclosure.
Fig. 9 is a schematic diagram of collection of movement rate information by a motion rate adaptation adjustment module.
Fig. 10 shows a curve of changes in Doppler frequency shift of a Low Earth Orbit (LEO) satellite at different frequency bands.
Fig. 11 is a schematic diagram of operation logic and processes of a motion rate adaptation adjustment module.
Fig. 12 is a flowchart of a control process of a motion time delay compensation module.

In the drawings: 1. Mobile terminal of a person asked for help; 2. Communication satellite; 3. Ground station; 4. Base station; 5. Mobile terminal of a person being asked for help; 6. Satellite communication parameter detection module; 7. Terminal movement state detection module; 8. Satellite movement tracking control module; 9. Motion trajectory fitting adjustment module; 10. Motion direction fitting adjustment module; 11. Motion rate adaptation adjustment module; 12. Motion time delay compensation module; 13. Movement guidance module; 14. Closed-loop detection correction module; 15. Application processor; 16. Satellite transceiver antenna; 17. Satellite transceiver link front end; 18. Satellite transceiver chip; and 19. Execution module.

### Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specific sequence or a precedence order.

The BeiDou short message communication technology in the related art provides basic satellite communication services, and a text message is forwarded by a BeiDou satellite. According to different application scenarios, the BeiDou short message communication may be divided into two modes, which are one-way communication and two-way communication. Under the one-way communication mode, a terminal emits a signal to a satellite, and then the satellite sends feedback information to a ground master control station after receiving the signal and forwards the feedback information to a rescue department or relatives and friends via a cellular base station. Under the two-way communication mode, short message information may be directly sent and received between the terminal and the satellite without via the satellite ground station and the cellular ground base station.

However, there is a problem in the related art, that is, during communication with the satellite, the movement state of the mobile terminal results in poor communication quality. For an existing 5G terminal, due to limitations of factors such as a terminal size, a chip area, etc., the efficiency and gain of a satellite communication antenna are often relatively low. Moreover, there are many antennas built in the 5G terminal, and an original GPS or satellite communication antenna needs to be used, thus affecting the satellite communication antenna of the terminal during posture change and movement. Therefore, when the mobile terminal is in position, posture change or movement, the gain of the satellite communication antenna changes, leading to a reduction in success rate for transmission and receiving, thus easily resulting in a problem of poor communication quality.

In order to solve the above problems in the related art, the present disclosure provides a method for adjusting satellite communication, and a computer-readable storage medium and a mobile terminal.

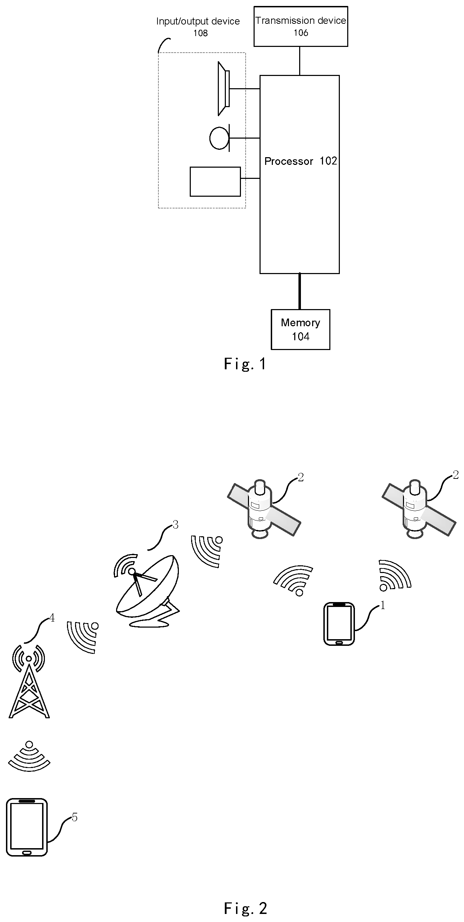

The method embodiments provided in the embodiments of the present disclosure may be executed in a mobile terminal, a computer terminal or a similar computing apparatus. By being operated on the mobile terminal as an example, Fig. 1 is a block diagram of a hardware structure of a mobile terminal of a method for adjusting satellite communication according to an embodiment of the present disclosure. As shown in Fig. 1, the mobile terminal may include one or more (only one is shown in Fig. 1) processors 102 (the processor 102 may include, but is not limited to, a processing apparatus such as a microprocessor MCU or a programmable logic device FPGA) and a memory 104 for storing data. The above mobile terminal may further include a transmission device 106 for achieving a communication function and an input/output device 108. Those skilled in the art may understand that the structure shown in Fig. 1 is only a schematic diagram, which does not limit the structure of the above mobile terminal. For example, the mobile terminal may also include more or less components than those shown in Fig. 1, or have a different configuration from that shown in Fig. 1.

The memory 104 may be configured to store a computer program, for example, a software program and a module of application software, such as a computer program corresponding to a method for adjusting satellite communication in the embodiments of the present disclosure. The processor 102 runs the computer program stored in the memory 104, so as to execute various functional applications and data processing, that is, to realize the above method. The memory 104 may include a high-speed random access memory, and may further include a non-volatile memory, such as one or more magnetic disk memory apparatuses, a flash memory device, or other non-volatile solid-state memory devices. In some embodiments, the memory 104 may further include memories remotely disposed relative to the processor 102. The remote memories may be connected to the mobile terminal by using a network. Examples of the above NW include, but are not limited to, the Internet, an intranet, a local area NW, a mobile communication NW, and a combination thereof.

The transmission device 106 is configured to receive or transmit data via a network. The specific example of the above network may include a wireless network provided by a communication provider of the mobile terminal. In an example, the transmission device 106 includes a Network Interface Controller (NIC), and may be connected to other NW devices by using a base station, so as to communicate with the Internet. In an example, the transmission device 106 is a Radio Frequency (RF) module, which is configured to communicate with the Internet in a wireless manner.

The embodiments of the present disclosure may be operated on a network architecture shown in Fig. 2. As shown in Fig. 2, the network architecture includes: a mobile terminal 1 of a person asked for help, a communication satellite 2, a ground station 3, a base station 4, and a mobile terminal 5 of a person being asked for help. The network architecture is suitable for a form of a short message. When the person asked for help enters a region without mobile network coverage, if rescue information needs to be sent at this moment, the mobile terminal 1 of the person asked for help may be first used to demodulate a satellite signal for time synchronization, the satellite signal is demodulated, and an optimal communication satellite 2 is selected for connection. When a carrier-to-noise ratio CN0 value reaches preset intensity, the rescue information in the form of the short message is sent to the optimal communication satellite 2, and the communication satellite 2 receives the short message and sends an acknowledgement to the mobile terminal 1 of the person asked for help. The rescue information is forwarded to the satellite ground station 3 at the same time, the ground station 3 then forwards a signal to the base station 4, and the base station 4 forwards the rescue information to relevant rescue departments or the mobile terminal of the person asked for help.

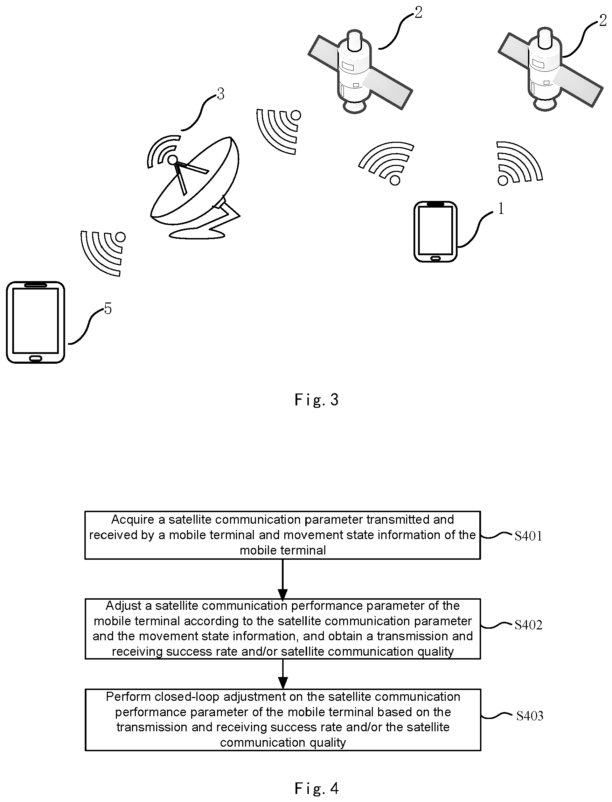

In particular, the embodiments of the present disclosure may also be operated on a network architecture shown in Fig. 3. As shown in Fig. 3, the network architecture includes: a mobile terminal 1 of a person asked for help, a communication satellite 2, a ground station 3, and a mobile terminal 5 of a person being asked for help. The network architecture is suitable for a form of voice call. When the person asked for help enters a region without mobile network coverage and wants to ask for help through voice, the mobile terminal 1 of the person asked for help may be first used to demodulate a satellite signal for time synchronization, the satellite signal is demodulated, and an optimal communication satellite 2 is selected for connection. When the carrier-to-noise ratio CN0 value reaches the preset intensity, contact information of a mobile terminal of a relative or friend is called via the optimal communication satellite 2, for example, manners such as 00+country code+ mobile phone number of a relative or friend, 00+country code+ landline phone number of a relative or friend, 00+12-bit iridium phone number, or the like. The communication satellite 2 constructs a call channel between the mobile terminal of the person asked for help and the mobile terminal 5 of the person being asked for help via the ground station 3, causing the person asked for help and the person being asked for help to have voice call or leave a message.

In particular, in an implementation, the network architecture may further include: a mobile terminal 1 of a person asked for help, a communication satellite 2, and a mobile terminal 5 of a person being asked for help. When the pressure of the communication satellite 2 for processing data is small, the communication satellite 2 may directly construct a cell channel between the mobile terminal 1 of the person asked for help and the mobile terminal 5 of the person being asked for help, causing the person asked for help and the person being asked for help to have voice call or leave a message.

This embodiment provides a method for adjusting satellite communication operated on the above network architecture. Fig. 4 is a flowchart of a method for adjusting satellite communication according to an embodiment of the present disclosure. As shown in Fig. 4, the flow includes the following steps.

At S401, a satellite communication parameter transmitted and received by a mobile terminal and movement state information of the mobile terminal are acquired.

In an implementation, the satellite communication parameter includes at least one of the following: a carrier-to-noise ratio, maximum transmitting power, a transmission time interval value, a synchronization time, a satellite number, the number of satellite channels, the number of satellite beams, or a satellite acknowledgement parameter.

The movement state information of the mobile terminal includes at least one of the following: a movement rate, movement acceleration, a movement direction, latitude and longitude, or an inclination angle.

In the embodiments of the present disclosure, an inclination angle state of the mobile terminal is detected by using an inclination algorithm for the mobile terminal, including, but not limited to, vertical, horizontal, transverse, and lengthwise inclination angle measurement, as well as vertical and horizontal inclination angle measurement at different angles. In an example of a mobile phone, X-, Y-, and Z-axis coordinates of the mobile phone are defined. The angle A is an azimuth angle of the mobile phone rotating around the Z-axis, with an omni-directional angle being 360°; the angle B is an inclination angle of the mobile phone rotating around the X-axis, with an omni-directional angle being 360°; and the angle C is a rotation angle of the mobile phone rotating around the Y-axis, with an omni-directional angle being 180°. Transverse, lengthwise, and various inclination angle information of the mobile phone is tested by a gyroscope, acceleration sensor, geomagnetic sensor, and gravity sensor built in the mobile phone, which may be measured and calculated by a single device, or may also be calculated through a combination of a plurality of devices. A phone orientation is detected by the geomagnetic sensor built in the mobile phone, the geomagnetic sensor measures the positions of geographical directions of east, south, west, north, and attitude angles by using a geomagnetic field and the geomagnetic sensor built in the mobile phone, and by using different motion states of the mobile phone in the geomagnetic field, distribution changes in the geomagnetic field are sensed to indicate the posture and motion angle of the mobile phone.

During measurement, the gyroscope (angular velocity sensor) measures the angular velocity of the mobile phone moving along one or several axes, which is a rotational angular velocity when the mobile phone deflects or inclines. The gyroscope in the mobile phone is a Micro Electro Mechanical System (MEMS) device that measures angular velocity and rotational displacement through changes in capacitance during rotation, thereby calculating rotational acceleration. The gyroscope measures the angular velocity of the mobile phone through actions such as deflection, inclination, etc. During navigation, the gyroscope measures the deflection and inclination angle information of the mobile phone and feeds back deviations generated during shaking or movement for corresponding compensation, pre-calculation adjustment, and correction. By calculating an angle, direction, velocity, and time, a changed displacement distance is obtained to realize direction angle fitting for accurate transmission or receiving a signal. Moreover, the motion of the mobile phone is sensed by the acceleration sensor, so as to determine whether the mobile phone is in a stationary state or a motion state, as well as motion velocity and acceleration.

At S402, a satellite communication performance parameter of the mobile terminal is adjusted according to the satellite communication parameter and the movement state information, and a transmission and receiving success rate and/or satellite communication quality are obtained.

In an implementation, the satellite communication performance parameter includes at least one of the following: a parameter for a satellite transceiver antenna, a parameter for a satellite transceiver link front end, or a parameter for a satellite transceiver chip.

In an exemplary implementation, in an example of a mobile phone, the transmission and receiving success rate for the mobile phone to transmit or receive information may be acquired by the following manners.

Monitoring a data transmission state: a network monitoring tool or an application program is used for monitoring the transmission state of the mobile phone when sending and receiving data. These tools may provide real-time indicators such as a data transmission speed, a time delay, a packet loss rate, etc.

Using a network quality evaluation application program: some application programs may assist in evaluating network quality and a transmission and receiving success rate. These application programs may provide a real-time report on network connection quality and display the success rate of sending and receiving data.

Services provided by a network operator: some network operators may provide statistic data regarding the success rate for mobile phone data transmission. A user may check the service of the operator to learn the success rate for mobile phone data transmission.

Analyzing a data transmission log: a mobile phone system and application program may record logs of data transmission. By analyzing these logs, the success rate for data transmission may be learned, and reasons causing transmission problems may be found.

Performing an actual test: an actual test of sending and receiving data may be performed to evaluate the transmission and receiving success rate of the mobile phone. For example, a large number of data packets may be sent and both successful and failed instances may be recorded, and then the success rate may be calculated.

In the mobile phone, the satellite communication quality may be acquired by the following manners.

Opening mobile phone settings: a settings interface of the mobile phone is entered.

Entering position service settings: a "position information" or "position service" option is found in the settings interface.

Opening satellite positioning: in the position service settings, a "satellite positioning" or "GPS" option is found and opened.

Checking satellite signal strength: once satellite positioning is enabled, the mobile phone starts searching for and receiving a satellite signal. In the position service settings, current satellite signal strength is displayed. The satellite signal strength is usually displayed in the form of a grid or bar chart, and if the strength is higher, it indicates that the received satellite signal is stronger, and the communication quality is better.

Observing positioning accuracy: in addition to the signal strength, the mobile phone also displays current positioning accuracy. The positioning accuracy indicates a deviation range between the position information of the mobile phone and an actual position. If the accuracy is higher, it indicates that the positioning quality is better.

Testing a navigation function: a navigation application or map application of the mobile phone may be used to test the accuracy and stability of the navigation function. If the navigation function can operate stably and provide accurate navigation guidance, it indicates that the satellite communication quality is better.

At S403, closed-loop adjustment is performed on the satellite communication performance parameter of the mobile terminal based on the transmission and receiving success rate and/or the satellite communication quality.

Through the above step, since the mobile terminal is in a position, posture change or movement state, the mobile terminal can adapt to different operation environments by dynamically adjusting the satellite communication performance parameter, thereby improving the success rate for communication and the satellite communication quality. Therefore, the problem of poor communication quality caused by the mobile terminal during communication with a satellite may be solved, thereby achieving the effect of improving the satellite communication quality.

In an implementation, adjusting the satellite communication performance parameter of the mobile terminal according to the satellite communication parameter and the movement state information includes the following operations.

A navigation path or real-time motion trajectory information of the mobile terminal is acquired according to the satellite communication parameter and the movement state information, slicing processing is performed on the navigation path or the real-time motion trajectory information, and the navigation path or the real-time motion trajectory information is divided into different path trajectory segments.

The path trajectory segments are compared with adjustment parameters in a data base to obtain corresponding adjustment parameters, so as to adjust at least one of the following performance parameters: a parameter for a satellite transceiver antenna, a parameter for a satellite transceiver link front end, or a parameter for a satellite transceiver chip, where a mapping relationship between the path trajectory segment and the adjustment parameter is preset in the data base.

In an implementation, the navigation path or real-time motion trajectory information of the mobile terminal is acquired according to the satellite communication parameter and the movement state information. By acquiring the satellite communication parameter and the state information of the mobile terminal, the navigation path or real-time motion trajectory information of the mobile terminal may be obtained. These pieces of information may be configured to analyze and optimize the satellite communication performance of the mobile terminal.

The navigation path or real-time motion trajectory information is subjected to slicing processing and divided into different path trajectory segments. The acquired navigation path or real-time motion trajectory information is subjected to slicing processing and divided into different path trajectory segments. Each path trajectory segment corresponds to communication requirements of the mobile terminal at different time periods or positions.

The path trajectory segment is compared with the adjustment parameter in the data base to obtain the corresponding adjustment parameter. By performing comparison on the mapping relationship between the path trajectory segment and the adjustment parameter that is preset in the data base, the adjustment parameter corresponding to each path trajectory segment may be obtained. These adjustment parameters may be configured to adjust the satellite communication performance parameter.

At least one of the following performance parameters is adjusted by using the obtained adjustment parameters: a parameter for a satellite transceiver antenna, a parameter for a satellite transceiver link front end, or a parameter for a satellite transceiver chip. According to the obtained adjustment parameters, the satellite communication performance parameter of the mobile terminal may be adjusted correspondingly. These performance parameters may include the parameter for the satellite transceiver antenna, the parameter for the satellite transceiver link front end, the parameter for the satellite transceiver chip, etc. By adjusting these parameters, the transmission quality and stability of satellite communication may be optimized, thereby improving the communication effect and success rate.

By using the above manners, the satellite communication performance parameter of the mobile terminal may be dynamically adjusted according to the satellite communication parameter and the movement state information. By analyzing the navigation path or real-time motion trajectory information and comparing same with the adjustment parameter in the data base, the corresponding adjustment parameter may be obtained and configured to adjust the satellite communication performance parameter, thereby optimizing the quality and stability of communication connection.

In an implementation, adjusting the satellite communication performance parameter of the mobile terminal according to the satellite communication parameter and the movement state information further includes the following operation.

A plurality of time delays between the mobile terminal and a communication satellite are acquired according to the satellite communication parameter and the movement state information, and time delay compensation is performed respectively.

In an implementation, the plurality of time delays between the mobile terminal and the communication satellite are acquired according to the satellite communication parameter and the movement state information. By acquiring the satellite communication parameter and the state information of the mobile terminal, the plurality of time delays between the mobile terminal and the communication satellite may be obtained, for example, a signal transmission time delay, a processing time delay, a propagation time delay, etc. These time delays directly affect the performance of satellite communication.

Different time delays are compensated respectively. For different types of time delays acquired, corresponding compensation processing needs to be performed. The purpose of time delay compensation is to adjust satellite communication according to actual time delay situations, so as to ensure the stability and reliability of communication.

Time delay compensation is realized by adjusting the satellite communication performance parameter. According to specific situations and requirements for time delays, time delay compensation may be realized by adjusting the satellite communication performance parameter of the mobile terminal. By adjusting the parameter, the transmission rate, signal processing capability, etc. of satellite communication may be changed, thereby compensating different time delays.

By using the above manners, the plurality of time delays between the mobile terminal and the communication satellite may be acquired according to the satellite communication parameter and the movement state information, and compensation is performed on different time delays. Time delay compensation may be realized by adjusting the satellite communication performance parameter, so as to improve the quality and stability of communication. In this way, it may ensure that the communication between the mobile terminal and the satellite can be effectively optimized and improved in terms of time delay.

In an implementation, before adjusting the satellite communication performance parameter of the mobile terminal again, the method further includes the following operation.

Prompt information for adjustment is generated according to the satellite communication parameter and the movement state information.

Prompt content includes at least one of the following: a movement rate, movement acceleration, a movement direction, a movement trajectory, a satellite transmission and receiving interval, terminal pitch angle guidance, or terminal placement position guidance.

A prompt manner includes at least one of the following: vibration, color change, voice, or animation.

By using the above manners, the prompt information for adjustment is generated according to the satellite communication parameter and the movement state information, such that the user may be helped to adjust the satellite communication performance parameter of the mobile terminal more accurately. Whether a user movement rate is suitable for the current satellite communication parameter is prompted according to the velocity information of the mobile terminal. If the movement velocity is relatively fast, corresponding measures may be taken to ensure the stability of communication. Whether user movement acceleration affects the satellite communication performance is prompted according to the acceleration information of the mobile terminal. If the movement acceleration is relatively large, attentions need to be paid to parameter adjustment to improve the reliability of communication. Whether the direction in which the user currently moves affects the stability of satellite communication is prompted according to the direction information of the mobile terminal. The direction of an antenna needs to be adjusted, or the orientation of the terminal needs to be changed. A communication quality change that the user may experience is prompted according to the trajectory information of the mobile terminal. For example, when the user traverses tall buildings or narrow canyons between mountains, a communication signal may be obstructed. According to the satellite communication parameter and the movement state information, the user is prompted to adjust a satellite transmission and receiving interval to obtain a better communication effect. For example, if signal quality is relatively poor, the transmission and receiving interval may be properly prolonged to increase the success rate for communication. According to the satellite communication parameter and the movement state information, the user is prompted to adjust a pitch angle of the terminal. The adjustment of the pitch angle may change an angle between the terminal and the satellite to affect communication quality. According to the satellite communication parameter and the movement state information, the user is prompted to adjust a placement position of the terminal. An appropriate placement position may provide a better satellite signal receiving and sending condition, thereby improving communication performance. In order to let the user to receive adjustment information more intuitively, different prompt manners may be used, such as vibration, color change, voice, animation, etc. The user may select the appropriate prompt manner according to his/her preferences and habits.

In an implementation, adjusting the satellite communication performance parameter of the mobile terminal according to the satellite communication parameter and the movement state information further includes the following operation.

A relative rate between a movement rate of a communication satellite and the movement rate of the mobile terminal is determined when it is confirmed, based on the movement state information, that the movement rate of the mobile terminal is greater than a preset threshold.

A terminal satellite signal frequency offset value is determined according to the relative rate.

A satellite receiver demodulation frequency center value of the mobile terminal is determined based on the terminal satellite signal frequency offset value, so as to adjust a parameter for a satellite transceiver chip.

In an implementation, the relative rate between the movement rate of the communication satellite and the movement rate of the mobile terminal is determined when it is confirmed, based on the movement state information, that the movement rate of the mobile terminal is greater than the preset threshold; and the movement rate of the mobile terminal refers to the velocity of the terminal moving in a space. When the movement rate exceeds the preset threshold, satellite communication may be affected. In order to ensure the stability of communication, the relative rate between the movement rate of the communication satellite and the movement rate of the mobile terminal needs to be determined. By comparing the rates of the satellite and the terminal, whether to perform further adjustment needs to be determined.

The terminal satellite signal frequency offset value is determined according to the relative rate; and the relative rate between the mobile terminal and the satellite leads to a shift in signal frequency. By determining the terminal satellite signal frequency offset value according to the relative rate, a signal receiving frequency of the terminal may be adjusted to cause it to maintain consistent with the satellite signal frequency. In this way, the accuracy of signal transmission and demodulation may be ensured.

The satellite receiver demodulation frequency center value of the mobile terminal is determined based on the terminal satellite signal frequency offset value, so as to adjust the parameter for the satellite transceiver chip; and after the terminal satellite signal frequency offset value is determined, the satellite receiver demodulation frequency center value of the mobile terminal may be adjusted based on this. By adjusting the parameter for the satellite transceiver chip, the mobile terminal can receive and demodulate the satellite signal more accurately. In this way, the quality and stability of communication may be improved.

To sum up, the process of adjusting the satellite communication performance parameter of the mobile terminal according to the satellite communication parameter and the movement state information includes determining that the movement rate of the mobile terminal is greater than the preset threshold, determining the relative rate, determining the terminal satellite signal frequency offset value, and adjusting the satellite receiver demodulation frequency center value of the mobile terminal. The purpose of these steps is to ensure that the mobile terminal can stably communicate with the satellite and maintain good signal transmission quality.

In an implementation, adjusting the satellite communication performance parameter of the mobile terminal according to the satellite communication parameter and the movement state information further includes the following operation.

Different performance parameter adjustment manners are matched according to different rate levels of the mobile terminal when it is determined, based on the movement state information, that the mobile terminal is in a variable speed state.

In an implementation, the satellite communication performance parameter of the mobile terminal is adjusted according to the satellite communication parameter and the movement state information, and at the same time, when considering that the mobile terminal is in the variable speed state, different performance parameter adjustment manners are matched according to different rate levels of the mobile terminal.

The mobile terminal may experience different rate levels during communication, for example, low-speed movement, medium-speed movement, or high-speed movement. Each rate level corresponds to different movement states and communication requirements. Therefore, when the performance parameter is adjusted, the corresponding adjustment manner needs to be selected according to the rate level of the mobile terminal.

By determining, based on the movement state information, that the mobile terminal is in the variable speed state, the current rate level of the mobile terminal may be determined. According to different rate levels, different performance parameter adjustment manners may be selected. For example, in a high-speed movement state, communication efficiency and a signal coverage may be improved by using a faster data transmission rate and higher signal transmission power; and in a low-speed movement state, the battery life of the terminal may be prolonged by using a more stable transmission mode and a lower power consumption mode.

By matching different performance parameter adjustment manners according to different rate levels of the mobile terminal, the satellite communication performance may be optimized according to an actual movement state and a communication requirement. In this way, communication stability, signal transmission quality, and communication efficiency may be improved, and simultaneously, energy may also be saved to the maximum extent, and the endurance time of the terminal may be prolonged.

In an implementation, the method further includes the following operation.

Adjustment results of different performance parameter adjustment manners are acquired, and an angle of a satellite transceiver antenna is adjusted if it is determined, based on the adjustment results, that the mobile terminal is unable to transmit and receive communication information.

In an implementation, when adjustment is performed according to different performance parameter adjustment manners, if it is found that the mobile terminal cannot transmit and receive communication information normally, adjustment of the angle of the satellite transceiver antenna may be taken into consideration to solve the problem. This is because the performance of satellite communication is affected by a spatial position relationship between the satellite and the mobile terminal, and the space coverage and communication angle between the satellite and the mobile terminal may be changed by adjusting the angle of the satellite transceiver antenna, thereby improving the quality of communication connection.

In an implementation, adjusting the satellite communication performance parameter of the mobile terminal according to the satellite communication parameter and the movement state information further includes the following operations.

An included angle relationship between the mobile terminal and a communication satellite is acquired according to the satellite communication parameter and the movement direction in the movement state information.

An optimal satellite transceiver antenna is selected based on the included angle relationship.

A direction adjustment value of a maximum gain radiation direction of the optimal satellite transceiver antenna is determined.

The maximum gain radiation direction is adjusted based on the direction adjustment value.

In an implementation, the included angle relationship between the mobile terminal and the communication satellite is acquired according to the satellite communication parameter and the movement direction in the movement state information. By analyzing the satellite communication parameter and the state information of the mobile terminal, the included angle between the mobile terminal and the communication satellite may be determined. This included angle relationship may reflect the spatial position relationship between the mobile terminal and the communication satellite.

The optimal satellite transceiver antenna is selected based on the included angle relationship. An optimal satellite transceiver antenna may be selected according to the included angle between the mobile terminal and the communication satellite. The optimal satellite transceiver antenna causes the signal transmission effect to be the best and the communication quality to be the most stable.

The direction adjustment value of the maximum gain radiation direction of the optimal satellite transceiver antenna is determined. The optimal satellite transceiver antenna generally has one maximum gain radiation direction, which is the strongest direction of signal transmission. The direction adjustment value of the maximum gain radiation direction may be determined according to the included angle relationship of the optimal satellite transceiver antenna. This direction adjustment value indicates how many degrees the satellite transceiver antenna needs to be adjusted to point toward the optimal signal transmission direction.

The maximum gain radiation direction is adjusted based on the direction adjustment value. The maximum gain radiation direction may be adjusted according to the determined direction adjustment value. This adjustment may be realized in a mechanical manner or an electronic manner, so as to ensure that the satellite transceiver antenna points toward the optimal signal transmission direction.

By using the above manners, the satellite communication performance parameter of the mobile terminal may be dynamically adjusted according to the satellite communication parameter and the movement state information. In this way, the quality and stability of communication connection may be optimized, thereby improving the signal transmission effect and the success rate for communication. Moreover, by selecting the optimal satellite transceiver antenna and adjusting the maximum gain radiation direction, a communication system may be more suitable for different environments and movement states, thereby further improving communication performance.

From the above descriptions about the implementation modes, those skilled in the art may clearly know that the method of the foregoing embodiments may be implemented in a manner of combining software and a necessary universal hardware platform, and certainly, may also be implemented through hardware, but the former is a preferred implementation mode under many circumstances. Based on such an understanding, the technical solutions of the present disclosure substantially or parts making contributions to the conventional art may be embodied in form of software product, and the computer software product is stored in a storage medium (for example, a ROM/RAM), a magnetic disk and an optical disk), including a plurality of instructions configured to enable a terminal device (which may be a mobile phone, a computer, a server, a network device, or the like) to execute the method in each embodiment of the present disclosure.

This embodiment further provides an apparatus for adjusting satellite communication. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

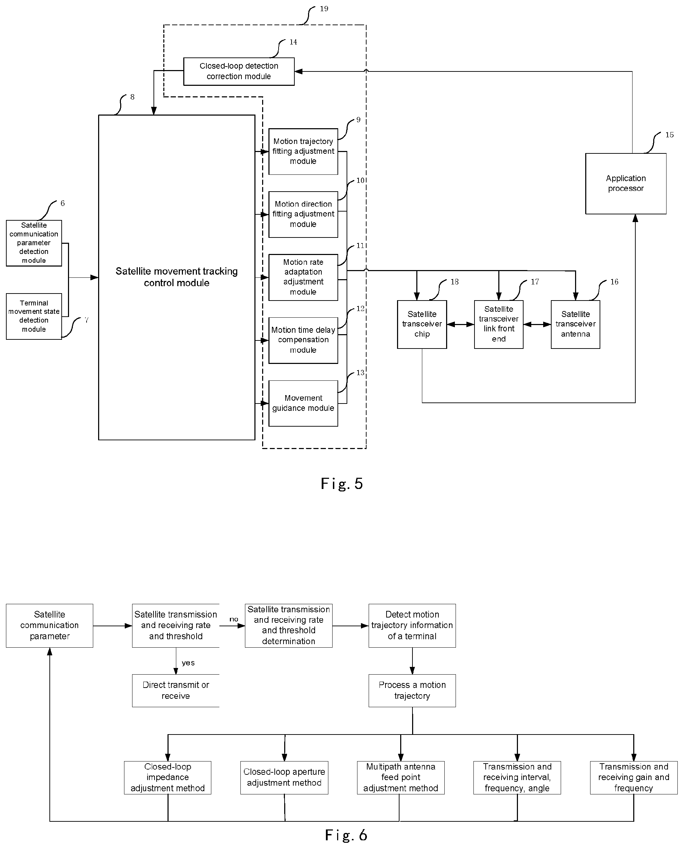

Fig. 5 is a structural block diagram of an apparatus for adjusting satellite communication according to an embodiment of the present disclosure. As shown in Fig. 5, the apparatus includes a satellite communication parameter detection module, a terminal movement state detection module, and a satellite movement tracking control module.

The satellite communication parameter detection module 6 is configured to acquire a satellite communication parameter transmitted and received by a mobile terminal.

The terminal movement state detection module 7 is configured to acquire movement state information of the mobile terminal.

The satellite movement tracking control module 8 is configured to adjust a satellite communication performance parameter of the mobile terminal according to the satellite communication parameter and the movement state information, and obtain a transmission and receiving success rate and/or satellite communication quality.

Closed-loop adjustment is performed on the satellite communication performance parameter of the mobile terminal based on the transmission and receiving success rate and/or the satellite communication quality.

The satellite communication parameter includes at least one of the following: a carrier-to-noise ratio, maximum transmitting power, a transmission time interval value, a synchronization time, a satellite number, the number of satellite channels, the number of satellite beams, or a satellite acknowledgement parameter.

The movement state information of the mobile terminal includes at least one of the following: a movement rate, movement acceleration, a movement direction, latitude and longitude, or an inclination angle.

The satellite communication performance parameter includes at least one of the following: a parameter for a satellite transceiver antenna, a parameter for a satellite transceiver link front end, or a parameter for a satellite transceiver chip.

In an implementation, the apparatus is further configured to acquire a navigation path or real-time motion trajectory information of the mobile terminal according to the satellite communication parameter and the movement state information, perform slicing processing on the navigation path or the real-time motion trajectory information, and divide same different path trajectory segments.

The path trajectory segments are compared with adjustment parameters in a data base to obtain corresponding adjustment parameters, so as to adjust at least one of the following performance parameters: a parameter for a satellite transceiver antenna, a parameter for a satellite transceiver link front end, or a parameter for a satellite transceiver chip, where a mapping relationship between the path trajectory segment and the adjustment parameter is preset in the data base.

In an implementation, the apparatus is further configured to acquire a plurality of time delays between the mobile terminal and a communication satellite according to the satellite communication parameter and the movement state information, and respectively perform time delay compensation.

In an implementation, the apparatus is further configured to generate prompt information for adjustment according to the satellite communication parameter and the movement state information.

Prompt content includes at least one of the following: a movement rate, movement acceleration, a movement direction, a movement trajectory, a satellite transmission and receiving interval, terminal pitch angle guidance, or terminal placement position guidance.

A prompt manner includes at least one of the following: vibration, color change, voice, or animation.

In an implementation, the apparatus is further configured to determine a relative rate between a movement rate of a communication satellite and the movement rate of the mobile terminal when confirming, based on the movement state information, that the movement rate of the mobile terminal is greater than a preset threshold.

A terminal satellite signal frequency offset value is determined according to the relative rate.

A satellite receiver demodulation frequency center value of the mobile terminal is determined based on the terminal satellite signal frequency offset value, so as to adjust a parameter for a satellite transceiver chip.

In an implementation, the apparatus is further configured to match different performance parameter adjustment manners according to different rate levels of the mobile terminal when determining, based on the movement state information, that the mobile terminal is in a variable speed state.

In an implementation, the apparatus is further configured to acquire adjustment results of different performance parameter adjustment manners, and adjust an angle of a satellite transceiver antenna if determining, based on the adjustment results, that the mobile terminal is unable to transmit and receive communication information.

In an implementation, the apparatus is further configured to acquire an included angle relationship between the mobile terminal and a communication satellite according to the satellite communication parameter and the movement direction in the movement state information.

An optimal satellite transceiver antenna is selected based on the included angle relationship.

A direction adjustment value of a maximum gain radiation direction of the optimal satellite transceiver antenna is determined.

The maximum gain radiation direction is adjusted based on the direction adjustment value.

In an exemplary implementation, the processes of the above method are explained and described with reference to the above apparatus.

As shown in Fig. 5, the apparatus further includes an execution module 19. The execution module 19 includes a motion trajectory fitting adjustment module 9, a motion direction fitting adjustment module 10, a motion rate adaptation adjustment module 11, a motion time delay compensation module 12, a movement guidance module 13, and a closed-loop detection correction module 14. The satellite communication parameter detection module 6 and the terminal movement state detection module 7 both are communicatively connected to the satellite movement tracking control module 8; the motion trajectory fitting adjustment module 9, the motion direction fitting adjustment module 10, the motion rate adaptation adjustment module 11, the motion time delay compensation module 12, and the movement guidance module 13 all are communicatively connected to the satellite movement tracking control module 8; the closed-loop detection correction module 14 is communicatively connected to the satellite movement tracking control module 8 and an application processor 15; and the application processor 15 is communicatively connected to a satellite transceiver chip 18. The motion trajectory fitting adjustment module 9, the motion direction fitting adjustment module 10, the motion rate adaptation adjustment module 11, the motion time delay compensation module 12, and the movement guidance module 13 all are communicatively connected to a satellite transceiver antenna 16, a satellite transceiver link front end 17, and the satellite transceiver chip 18, so as to be configured to adjust a parameter for the satellite transceiver antenna 16, a parameter for the satellite transceiver link front end 17, and a parameter for the satellite transceiver chip 18.

The satellite movement tracking control module 8 is communicatively connected to the motion trajectory fitting adjustment module 9, the motion direction fitting adjustment module 10, the motion rate adaptation adjustment module 11, the motion time delay compensation module 12, the movement guidance module 13, and the closed-loop detection correction module 14. Through the collected movement state information of the terminal, digital computation is performed on different state parameters such as movement directions, rates, acceleration, inclination angles, motion trajectories, and front and rear latitude and longitude coordinate information, so as to select an optimal adjustment solution, and data is pre-processed for control classification, so as to determine whether it is single adjustment or combined adjustment. Herein, the priority of single adjustment is higher than that of combined adjustment. When the success rate for transmission or receiving of single adjustment is low, the combined adjustment solution is randomly started.

The determination process and logic relationship between control and calling of the satellite movement tracking control module 8 are as follows.

A user first starts satellite communication and then detects the movement state information of the mobile terminal, starts a currently-connected satellite movement tracking control mechanism if the mobile terminal is in a motion state, and starts a non-movement tracking control mechanism if the mobile terminal is in a stationary state.

The operation process of the satellite movement tracking control mechanism is as follows.

The satellite movement tracking control module 8 performs transmission and receiving threshold indicator evaluation, for example, if a threshold is met, transmission is directly performed, and if it is lower than the threshold, correction and adjustment are performed to meet the threshold, and then transmission is started.

If a transmission and receiving failure occurs, whether there is a transmission failure or a receiving failure is further determined according to transmission and receiving information, and the corresponding adjustment module is called. If the receiving failure occurs, a satellite receiving antenna and related modules are adjusted; and if a signal transmission indicator failure occurs, a satellite transmission antenna and related modules are adjusted. In an implementation, if satellite communication fails due to factors such as a detection parameter being a low CN0 carrier-to-noise ratio, time synchronization failure, disconnection of satellite beams, etc., the receiving of a signal fails. If receiving is successfully achieved, transmission is started, but a feedback signal is not received, the transmission of the signal fails.

First, the satellite communication mobile terminal locks and selects, through a detection signal, a communication satellite 2 that is the most suitable for the movement state of the mobile terminal.

second, directional satellite communication tracking adjustment is performed by calling the motion direction fitting adjustment module 10. The current motion direction of the mobile terminal is measured first; by adjusting the motion direction, satellite signal quality values such as the carrier-to-noise ratio CN0 value are detected and collected; and by comparing collected values, the positions and angles of the satellite transmission antenna and receiving antenna that are the most suitable for the motion direction are selected.

again, motion trajectory calculation, estimation, fitting, and real-time tracking adjustment are performed by the motion trajectory fitting adjustment module 9. The motion trajectory information of the mobile terminal is detected, the strongest communication satellite 2 is selected according to the motion trajectory, and the optimal adjustment direction, step, and angle of the antenna matching the motion trajectory are selected at the same time, until the satellite is successfully transmitted and received.

then, real-time tracking adjustment of the matching of different rate modes is performed by the motion rate adaptation adjustment module 11. If adjustment by the motion trajectory fitting adjustment module 9 fails and it is detected that the movement rate of the mobile terminal is too fast or experiences significant speed fluctuations, the motion rate adaptation adjustment module 11 may be started to detect the movement rate or acceleration of the mobile terminal to determine whether the mobile terminal moves at a low speed, a medium speed, or a high speed, thereby calculating a Doppler frequency shift, a transmission and receiving frequency point matching same is selected, movement, tracking, and adjustment are performed by means of adjusting an antenna step, and the optimal transmission and receiving timing and frequency are triggered according to the motion rate and the transmission and receiving signal quality parameter. If the rate is too fast, the transmission and receiving frequency needs to be increased, and if the rate is relatively slow, the frequency point needs to be reduced.

If the motion rate adaptation adjustment module 11 fails to successfully achieve transmission and receiving, the signal transmission and receiving quality is unstable, and a transmission and receiving time interval is relatively large, the motion time delay compensation module 12 may be called to perform corresponding transmission and receiving time delay compensation, causing the mobile terminal to be in movement, and the satellite transmission timing is aligned with the satellite return signal timing to improve the transmission and receiving success rate during movement.

Finally, the user is guided by the movement guidance module 13 to adjust to an optimal movement state, so as to meet the transmission and receiving threshold. If adjustment by the motion time delay compensation module 12 fails, the movement guidance module 13 needs to be further called to guide the user to change the movement rate, movement direction, and placement inclination angle of the mobile terminal to match an optimal guidance pattern or parameter, until receiving and transmission are successfully realized.

If the satellite communication signal cannot be successfully transmitted or received by the above methods, the combined adjustment method may be used. That is, two or more of the motion direction fitting adjustment module, the motion trajectory fitting adjustment module, the motion rate adaptation adjustment module, the motion time delay compensation module, and the movement guidance module are caused to operate at the same time to perform combined adjustment, until the satellite communication signal is successfully received and transmitted.

Fig. 6 is an operation schematic diagram I of a motion trajectory fitting adjustment module 9 according to an embodiment of the present disclosure.

As shown in Fig. 6, the satellite movement tracking control module 8 acquires the satellite communication parameter information of the mobile terminal in real time, such as the carrier-to-noise ratio CN0 value and the like, to determine whether the transmission threshold is met, and if so, a transmission or receiving action is directly started. Is no, it indicates that the current satellite signal quality is relatively poor, and the motion trajectory fitting adjustment module 9 may be started. The motion trajectory fitting adjustment module 9 detects the motion trajectory information of the mobile terminal, including, but not limited to, a current position, a destination position, a navigation movement path, a movement curve, lane change information, etc.; the most strongest or suitable GEO satellite or LEO satellite is selected according to the motion trajectory; the motion trajectory is processed; the optimal adjustment direction, step, and angle of the antenna matching the motion trajectory are selected by using methods such as a closed-loop impedance adjustment method, a closed-loop aperture adjustment method, a multipath antenna feed point adjustment method, etc., or the transmission and receiving interval, frequency, angle of the satellite transceiver chip 18 are adjusted, or the transmission and receiving gain and frequency of the satellite transceiver link front end 17 are adjusted. Finally, the application processor 15 continues to obtain the transmission and receiving success rate or satellite communication quality of the satellite, until the communication signal of the satellite is successfully transmitted and received.

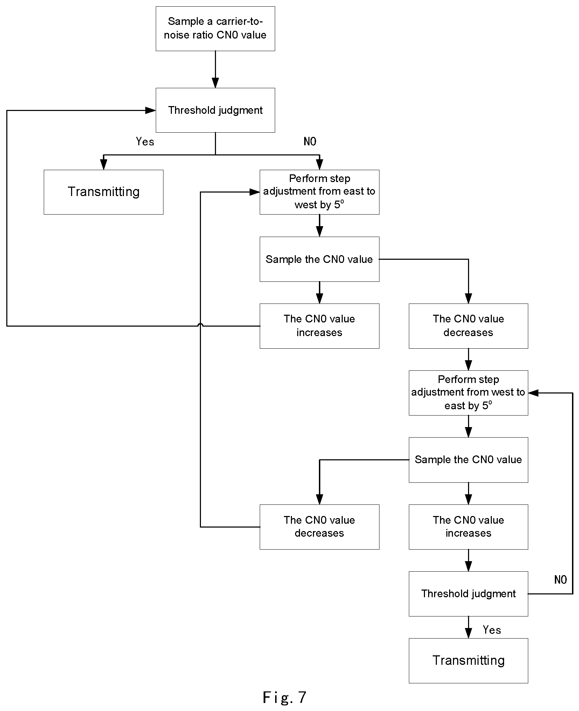

Fig. 7 is an operation schematic diagram II of a motion trajectory fitting adjustment module 9 according to an embodiment of the present disclosure.

As shown in Fig. 7, in an example of adjusting the satellite transceiver antenna 16, the satellite movement tracking control module 8 acquires the carrier-to-noise ratio CN0 value, perform Threshold judgment on the carrier-to-noise ratio CN0 value, and control the mobile terminal to directly transmit communication information if the carrier-to-noise ratio CN0 value is greater than or equal to a preset threshold. If the carrier-to-noise ratio CN0 value is less than the preset threshold, step adjustment is performed to move the satellite transceiver antenna 16 5° from east to west; after adjustment, the carrier-to-noise ratio CN0 value is collected again; if the carrier-to-noise ratio CN0 value collected increases again, Threshold judgment is continuously performed; cyclic adjustment is performed again, until the carrier-to-noise ratio CN0 value is greater than or equal to the preset threshold, and the mobile terminal is controlled to directly transmit the communication information. If the collected carrier-to-noise ratio CN0 value decreases again, step adjustment is performed to move the satellite transceiver antenna 16 5° from west to east; the carrier-to-noise ratio CN0 value is collected again; and if the collected carrier-to-noise ratio CN0 value continues to decrease, and step adjustment is performed to move the satellite transceiver antenna 16 5° from east to west, and cyclic adjustment is performed. If the collected carrier-to-noise ratio CN0 value increases, Threshold judgment is continuously performed; and if the carrier-to-noise ratio CN0 value is greater than or equal to the preset threshold, the mobile terminal is controlled to directly transmit the communication information. If the carrier-to-noise ratio CN0 value is less than the preset threshold, step adjustment is continuously performed to move the satellite transceiver antenna 16 5° from west to east, until the carrier-to-noise ratio CN0 value is greater than or equal to the preset threshold, and the mobile terminal is controlled to directly transmit the communication information.

In an implementation, when the included angle or axis of the mobile terminal aligns with the maximum gain point orientation of a directional diagram of the receiving antenna, satellite clock synchronization is performed, and the carrier-to-noise ratio CN0 value of the current satellite and wave speed is captured; and when the CN0 value reaches a threshold (e.g., 38 dB), it indicates that the receiving quality meets a transmission requirements, such that a transmission preparation process may be started. In this case, the satellite antenna directional diagram is adjusted; and when the included angle or axis of the mobile terminal aligns with the maximum gain point orientation of a directional diagram of the transmission antenna, it indicates that the transmission performance meets the requirements, such that a satellite communication transmission operation may be directly triggered.

In an example of the motion trajectory closed-loop impedance adjustment method, a variable impedance tuning device or tuning chip is added to a signal feed point transmission path of the satellite communication transmission or receiving antenna, that is, a closed-loop impedance adjustment device is added to a signal link between a satellite transmission Power Amplifier (PA) or post-stage filter and the satellite transmission antenna, on a signaling link between a satellite receiving Low-Noise Amplifier (LNA) or post-stage filter and the satellite receiving antenna, according to the above motion trajectory calculation result, each motion trajectory is subjected to segmented slicing processing in advance, so as to be divided into different motion trajectory nodes or sections, each unit resistance-capacitance-inductance parameter in a closed-loop impedance link module is finely tuned, or different impedance matching combinations are formed through the connection and disconnection of various architectures thereof, thereby realizing the adjustment of a radiation direction of the variable directional diagram of the maximum gain point direction. The strongest gain direction suitable for the satellite corresponding to the motion trajectory is selected. That is, the current movement path may be pre-processed before the mobile terminal moves, when the mobile terminal moves to a path node position, a parameter pre-processed in advance may be called to perform, in real time, control adjustment that may change the maximum gain direction, and the strongest gain radiation direction aligning with the satellite communication antenna is tracked, until transmission and receiving are successfully realized.

In an example of the motion trajectory closed-loop aperture adjustment method, a variable impedance tuning device or tuning chip is added to a ground feed point of the satellite communication transmission or receiving antenna, and a closed-loop aperture adjustment device is added; according to the above motion trajectory calculation result, each motion trajectory is subjected to segmented slicing processing in advance, so as to be divided into different motion trajectory nodes or sections; and a ground parameter and a capacitance-inductance parameter in a closed-loop aperture link module are finely tuned to change the resonance characteristic and tuning frequency of the ground feed point of the satellite antenna, thereby changing the corresponding maximum radiation direction or frequency point. The strongest gain direction suitable for the satellite corresponding to the motion trajectory is selected. That is, the current movement path may be pre-processed before the mobile terminal moves, when the mobile terminal moves to a path node position, a parameter pre-processed in advance may be called to perform, in real time, control adjustment that may change the maximum gain direction, and the strongest gain radiation direction aligning with the satellite communication antenna is tracked, until transmission and receiving are successfully realized.

In an example of the motion trajectory multipath antenna feed point adjustment method, according to different motion directions and inclination angles of the mobile terminal, the satellite communication transmission or receiving antenna is divided into a plurality of different feed point positions, and each adjustable feed point or section corresponds to one antenna radiation direction. Feed point selection corresponds to motion trajectory path mapping, and movement trajectory tracking is performed by means of an adaptive adjustable feed point. When the satellite communication of the mobile terminal needs to modify a motion path, changes only need to be made to connect and disconnect different antenna feed points. The connection and disconnection states of different feed points change the strongest radiation direction of the satellite communication antenna to always align with the angle of the current communication satellite 2. Similarly, a feed point plan corresponding to the motion trajectory is selected, and after a movement path is planned by the mobile terminal and started, the current movement path may be pre-processed before the mobile terminal moves, when the mobile terminal moves to a path node position, a parameter pre-processed in advance may be called to perform, in real time, control adjustment that may change the maximum gain direction, and the strongest gain radiation direction aligning with the satellite communication antenna is tracked, until transmission and receiving are successfully realized.

The above process of processing the motion trajectory may include: for example, when a navigation path is determined or before a next target is reached, pre-motion trajectory matching is pre-processed in advance, and according to the orientation, distance, included angle information of a path point with the communication satellite 2, etc., the corresponding adaptive adjustment methods and adjustment parameters are configured. For example, a movement trajectory slicing processing mechanism is used to slice each trajectory segment path and segment same into path trajectory sections with different accuracy, lengths, and steps, the path trajectory sections are classified and correspond to adjustment parameters that have been stored in a library, a slicing parameter meeting a certain transmission and receiving success rate threshold is calculated and generated into a corresponding motion trajectory adjustment parameter, the satellite transceiver antenna 16 is controlled for adjustment, so as to rapidly track adjustment calling in real time and in advance.

The motion direction fitting adjustment module 10 is configured to perform dynamic adjustment based on the motion direction or orientation of the mobile terminal, so as to realize real-time tracking transmission and receiving of different movement directional orientations of the user, and match optimal transmission and receiving antennas according to different motion directions, or perform alignment and fine tuning of the directional diagram of the selected antenna.

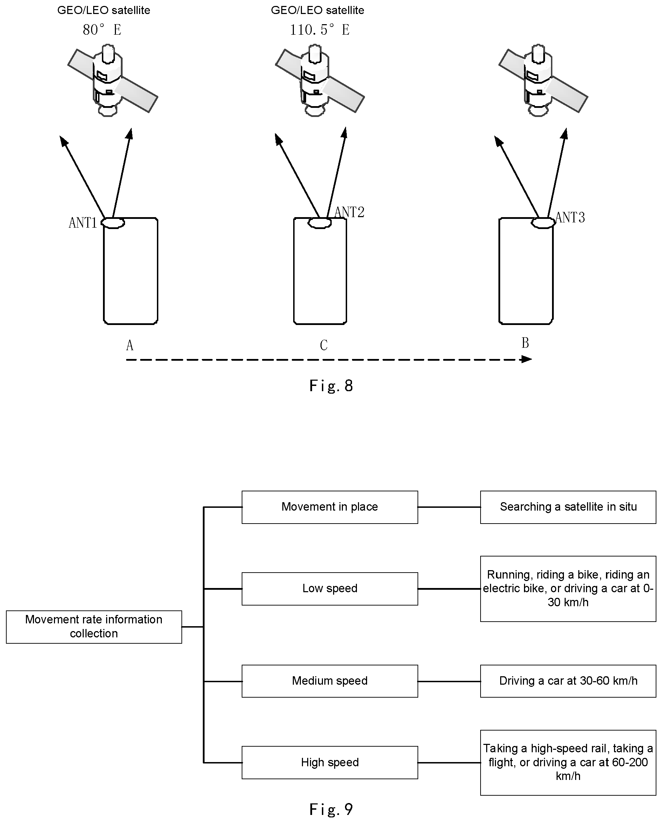

Fig. 8 is a diagram of changes in a satellite transceiver antenna 16 and a satellite angle of a mobile terminal when the mobile terminal moves according to an embodiment of the present disclosure.

As shown in Fig. 8, in a satellite communication mobile test, when the user transmits and receives a short message while seating inside a vehicle, the user may observe a high transmission success rate of the short message transmitted from west to east, and a low transmission success rate of the short message transmitted from west to east, and also observe a high transmission success rate of the short message transmitted from north to south, and a low transmission success rate of the short message transmitted from south to north. Through analysis, since a GEO or LEO satellite used for satellite communication is located at 80°E, 110.5°E, and 140°E, all of which are located near the southern direction. When the user is inside the vehicle and moves in different motion directions, the included angle with the communication satellite 2 changes significantly, the success rate is high within the southward range but low when being away from the southward direction, such that real-time adaptive adjustment needs to be performed to cause the transmission and receiving direction of the satellite transceiver antenna 16 to always remain aligned with the current direction of the communication satellite 2.

The motion direction fitting adjustment module 10 first acquires the current latitude and longitude information via a geomagnetic sensor, a compass, or a GPS chip in the mobile terminal, collects and calculates the movement directions of the mobile terminal in real time, and determines whether the direction is from south to north, from north to south, from east to west, from west to east, or any movement or motion direction from Point A to Point B, such as a direction from 30° northwest to 45° southeast.

When the coordinate position, moving direction, speed, and acceleration of the mobile terminal are determined, and since the latitude and longitude of the communication satellite 2 is known, the included angle between the mobile terminal and the communication satellite 2 may be calculated by a trigonometric formula.

Based on the above directional fitting results, since the directional diagram orientation of each satellite transceiver antenna 16 on the mobile terminal is arranged through antenna distribution with different orientations or finely tuned in the maximum gain radiation direction of the single antenna, the above closed-loop impedance adjustment method, closed-loop aperture adjustment method, and multipath antenna feed point adjustment method may also be called to match the current movement direction, until the maximum gain point or strongest receiving CN0 point is reached for transmission and receiving, such that the included angle between the transmission and receiving antennas of the adjusted mobile terminal align with the selected communication satellite 2.

When the mobile terminal moves in the direction from the Point A to the Point B, and since the mobile terminal is very far away from the communication satellite 2, the communication satellite 2 relatively connected to the satellite transmission and receiving antennas on the mobile terminal is not omni-directional, each antenna generates a certain directional diagram to cover a certain range, and during the movement of the mobile terminal, according to different included angle requirements of different communication satellites 2, different transceiver antennas ANT may be enabled, thereby achieving suitable antenna selection. For example, when passing through from the Point A to the Point B via a Point C, the transceiver antenna is switched from ANT1 to ANT2, and then switched to ANT3.

Different satellite transceiver antenna 16 groups are distributed across the top, bottom, left, and right sides of the mobile phone. Some are satellite independent antennas, while others are shared antennas for WIFI/BT/GPS. These antennas communicate with each other via a multi-input multi-output switch, forming selectable and switchable pathways to achieve coverage in all movement directions.

The motion rate adaptation adjustment module 11 is configured to cause the mobile terminal to perform dynamic tracking compensation adjustment at different movement rates, thereby increasing the transmission and receiving success rates.

Fig. 9 is a schematic diagram of collection of movement rate information by a motion rate adaptation adjustment module 11.

As shown in Fig. 9, in the satellite communication mobile test, when the mobile terminal carried by the user moves at low to medium speeds or implements medium-to-high speed transmission and receiving actions when the user seats inside the vehicle, if the movement rate of the mobile terminal is faster, the transmission or receiving success rate is lower, and if the movement acceleration of the mobile terminal is larger or rate changes are greater, the transmission or receiving success rate is lower. For example, when the mobile terminal moves at a speed lower than a rate of 30 km/h, the transmission and receiving success rates are higher, and when the mobile terminal moves at a speed higher than a rate of 60 km/h, the transmission and receiving success rates are lower.

The first reason is that when the mobile terminal is in motion, changes in an external environment and surrounding buildings cause impacts of blocking, scattering, reflection, diffraction, or the like on the transmission of corresponding satellite signals, leading to signal attenuation and loss during transmission and receiving. The second reason is that due to the rapid changes in the movement state of the mobile terminal and factors such as multipath effects, the optimal radiation direction of the antenna also undergoes rapid changes, such that there is a high probability that it deviates from the effective alignment angle range of the communication satellite 2. The third reason is that when the mobile terminal moves at a high speed, and since the communication satellite 2 also orbits the Earth at a high speed, their relative motion generates a corresponding Doppler frequency shift.

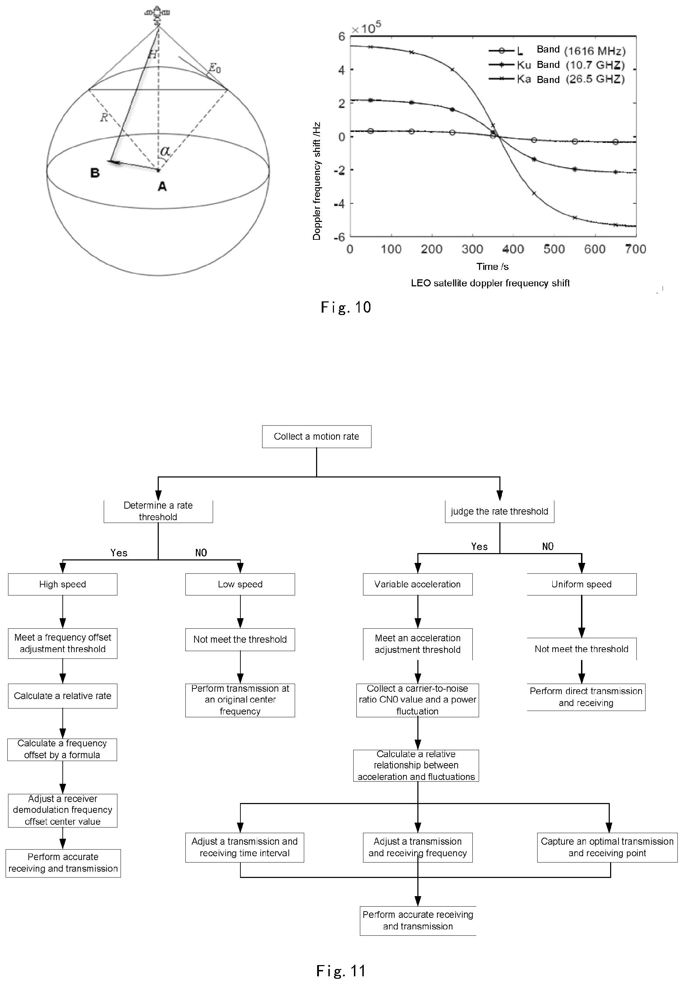

Fig. 10 shows a curve of changes in doppler frequency shift of a Low Earth Orbit (LEO) satellite at different frequency bands.

As shown in Fig. 10, in an example of the Doppler effect of the satellite transmission and receiving signal of the mobile terminal, when the mobile terminal moves at a high speed, the Doppler effect is generated due to changes in its relative position and speed with respect to the communication satellite 2, causing a frequency shift in the receiving antenna. According to a formula Δf=-( f0*Vd)/c, Δf represents a terminal satellite signal frequency offset value, f0 represents a satellite signal carrier frequency, Vd is the relative rate between the mobile terminal and the communication satellite 2, and c is the speed of light. Therefore, if the movement speed of the satellite communication terminal is faster, the Doppler effect is more significant, and the frequency shift is larger. If a received signal carrier frequency is 2.4 GHz, the corresponding maximum Doppler frequency shift is 40.8 kHz. If the relative movement rate of the terminal halves, the frequency shift is 20.4 kHz. If the current communication satellite 2 is a GEO satellite, a satellite rotation rate is slow, and the relative rate is small. If the current communication satellite 2 is a low-Earth orbit (LEO) satellite, since the satellite rotation rate is fast, the relative rate of the terminal is large, and a Doppler spectrum is also large. Therefore, the frequency shift of the LEO satellite is significantly greater than that of a medium-Earth orbit (MEO) satellite and a GEO satellite.

Moreover, during motion of the satellite communication terminal, the radial rate of the relatively-connected communication satellite 2 varies due to different inclination angles of the transceiver antenna of the mobile terminal, that is, the included angle between the mobile terminal and the communication satellite 2 is different, and the frequency shift also changes.

Therefore, the mobile terminal needs to calculate and adjust a receiving frequency in real time based on different motion rates, acceleration, and the included angle with respect to the communication satellite 2, so as to cause the frequency point of the terminal for demodulating the satellite signal to be more accurate, thereby further increasing the receiving success rate.

Fig. 11 is a schematic diagram of operation logic and processes of a motion rate adaptation adjustment module 11. As shown in Fig. 11, the operation logic and processes of the motion rate adaptation adjustment module 11 are as follows.

Whether the mobile terminal is in a low-speed motion state or a high-speed movement state is determined by the satellite movement tracking control module 8, and pitch angles of the mobile terminal relative to the communication satellite 2 are collected. Whether a frequency shift adjustment threshold range is reached is determined by a prediction model, and if the threshold is exceeded, a rate variable frequency adjustment system is started. The operation flow of the rate variable frequency adjustment system is as follows.

The current movement rate Va of the mobile terminal and the current rate Vs of the communication satellite 2 are collected to obtain the relative rate Vd. The frequency offset value of the satellite signal received by the mobile terminal is calculated according to the formula, and a carrier frequency is calculated to obtain a final received frequency value. The formula is: Δf=-(f0*Vd)/c, where Δf is the terminal satellite signal frequency offset value, f0 is the carrier frequency of the received satellite signal, Vd is the relative rate between the mobile terminal and the communication satellite 2, and c is the speed of light.

The satellite receiver demodulation frequency center value of the mobile terminal is finely tuned and matched the above calculated value for accurate demodulation.

The current motion speed and acceleration of the mobile terminal are collected in real time, and the current received carrier-to-noise ratio CN0 value and a fluctuation range are collected.

Transmission and receiving intervals and frequencies are set according to the movement rate and the fluctuation range of the CN0 value. If the movement rate is fast, the CN0 value often fluctuates significantly, an increase in the number of times for collection is required, an increase in the number of transmission and receiving frequencies is also required, so as to increase the success rate. If the movement rate is slow, the number of times for collection may be appropriately reduced, and the number of transmission and receiving frequencies may also be appropriately reduced.

If acceleration is detected in the mobile terminal at this moment, and when the acceleration changes unevenly, an optimal CN0 signal point is captured and selected for transmission, or is transmitted when the CN0 tends to a relatively stable range.

If rate or acceleration matching adjustment still fails, an antenna radiation direction angle adjustment mechanism may be called to select an appropriate relative included angle for transmission, until the CN0 is maximum, and transmission succeeds.

The motion time delay compensation module 12 is configured to increase the transmission and receiving success rates based on time delay compensation adjustment of the mobile terminal relative to the communication satellite 2 or a ground station 3.

The transmission and receiving time delay of the satellite communication terminal includes at least the following factors: the movement rate and acceleration of the mobile terminal, the radial distance between the mobile terminal and the communication satellite 2, the transmission time delay of the satellite signal, the processing and return transmission time delay at the ground station 3, the transmission and receiving interval time of a satellite communication SIM card, the Doppler frequency shift in satellite signal transmission, and the time delay caused by the multipath effect of the satellite signal.

For example, if a distance between the mobile terminal and the communication satellite 2 is L, and the speed of light is c, the transmission time delay is Δt = L/c, and when the L changes with the movement rate of the mobile terminal, the transmission time delay also changes.

The processing and return transmission time delay at the ground station 3 are that, when the user communicates with the communication satellite 2 via the mobile terminal, due to the weak satellite signal, the user inevitably needs to move or rotate to find an appropriate satellite for transmission. Moreover, after the user transmits a signal, the signal is received by the satellite and forwarded via the ground station 3, or the acknowledgement signal is directly returned by the satellite, and this process involves a delay of 2 to 5 seconds. During this process, the user may have moved to a different position or angle, resulting in displacement. The change in the position or angle causes the transmission and receiving of the satellite communication signal to be in different directions, leading to an original alignment direction being obsolete, and corresponding compensation and correction adjustment are therefore required.

The multipath effect in satellite signal transmission also introduces time delays. Due to the high-speed movement of user or satellite terminal, the satellite return signals are in different transmission channels and combined by a terminal satellite chip receiver after being consumed by different time delays and losses, so as to form the multipath effect, causing rapid changes in the combined signal amplitude and resulting in time delays. When two satellite signals with an same amplitude and an opposite phase are superimposed, the signals cancel each other out in terms of signal strength; and when two signals with the same amplitude and phase are superimposed, the signals reinforce each other in terms of signal strength. Furthermore, the Doppler shift caused by changes in the relative rate between the terminal and the satellite also results in corresponding variations in time delay.

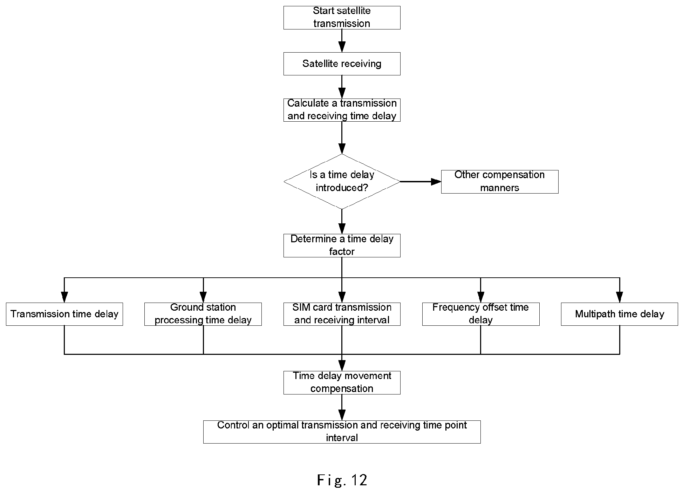

Fig. 12 is a flowchart of a control process of a motion time delay compensation module 12.

As shown in Fig. 12, the satellite movement tracking control module 8 acquires transmission and receiving time delays. If it is determined that the transmission and receiving time delays are abnormal, the motion time delay compensation module 12 is started. The motion time delay compensation module 12 determines one or more time delay factors of a transmission time delay, a ground station 3 processing time delay, an SIM card transmission and receiving interval time delay, a frequency offset time delay, and a time delay caused by the multipath effect, calculates and compensates for the above time delay values based on different rates, and adjusts the transmission and receiving time intervals in real time to cause a receiving point to match an optimal antenna state gain point, such that each transmission signal may be effectively received, thereby increasing the satellite receiving success rate.

The movement guidance module 13 is configured to select the optimal satellite communication movement state guidance for the user. When the above mobile tracking adjustment still fails to achieve successful transmission or receiving, the movement guidance module 13 may be started to guide the user in movement to perform tracking adjustment.

The factors guided by the movement guidance module 13 include: movement rate guidance, movement acceleration guidance, movement direction guidance, movement trajectory guidance, satellite transmission and receiving interval guidance, terminal pitch angle guidance, and terminal placement position guidance. Through the movement guidance module 13, corresponding adjustment is performed on the movement direction, rate, acceleration, and pitch angle, and an optimal motion trajectory point is displayed simultaneously. When the optimal trajectory point and rate point of the motion reach the strongest predicted CN0 value, transmission and receiving may be initiated.

In the form of movement guidance, one or more of vibration guidance, color gradient guidance, voice guidance, and animated guidance may be used to guide the user to adjust the above rate, acceleration, direction, or other path trajectories. Alternatively, the guidance module adjusts the transmission and receiving time intervals to trigger the signal at the optimal transmission and receiving point, or the manners of adjusting the placement position, pitch angle, etc. of the terminal are used.

Moreover, the user can also be prompted to adjust his/her movement state through vibration, so as to find the optimal transmission timing. If a specific angle is found and is the strongest angle for the CN0 value, vibration is activated randomly, and the user may pause at the current position to cause the mobile terminal to perform transmission and receiving actions.

Moreover, on a search interface of the mobile terminal, the user can also be guided to adjust and track a movement angle direction through color gradient. For example, red indicates an unavailable angle, green indicates an available angle; and if the green is deeper, id indicates that a recommended value is greater. Based on this, the user may visually grasp transmission and receiving regions and blind spots through the colors.

Moreover, when transmission and receiving are not aligned at the same azimuth angle, or in challenging environmental conditions where signals need to be transmitted and received at different angles, an animated guidance unit is required to guide the user to adjust his/her movement state.

Furthermore, the user can also be guided by voice and audio, so as to perform satellite direction searching adjustment or movement state adjustment. If a specific angle is found and is the strongest angle for the CN0 value, a voice prompt is then activated, and the user may pause at the current position to perform effective transmission and receiving actions.

The closed-loop detection correction module 14 is communicatively connected to the application processor 15 and the satellite movement tracking control module 8, and is configured to detect the satellite transmission and receiving success rates and perform closed-loop correction adjustment.

At present, traditional satellite transmission and receiving methods lack closed-loop correction functions. Whether the user successfully transmits the communication information via the mobile terminal, the user is not guided to perform second transmission, and there is also no corresponding correction adjustment, such that low transmission power or the perception of successful transmission but the ground station 3 cannot receive the satellite signal also leads to a failure in communication information transmission.

When the mobile phone fails to transmit the communication information, or still cannot normally transmit the communication information after being adjusted by the motion trajectory fitting adjustment module 9, the motion direction fitting adjustment module 10, the motion rate adaptation adjustment module 11, the motion time delay compensation module 12, and the movement guidance module 13, collection determination is performed on parameters such as a received signal parameter such as synchronize time, a carrier-to-noise ratio CN0 value, the number of satellites, the number of satellite beams, etc., as well as stability; if it is still lower than the threshold, fitting comparison is performed by the determined parameter indicators to analyze and check which adjustment step fails, so as to perform secondary correction; a correction parameter is transmitted to the satellite direction tracking control module to control the motion trajectory fitting adjustment module 9, the motion direction fitting adjustment module 10, the motion rate adaptation adjustment module 11, the motion time delay compensation module 12, and the movement guidance module 13 to perform secondary adjustment, direction reaching the transmission threshold, thereby initiating secondary transmission.

If the transmission is successful but the acknowledgement information of successful transmission is still not received, at this moment, it is necessary to determine whether a one-way satellite communication system or a two-way satellite communication system is used. If the one-way communication system is used, it indicates that transmission remains ineffective or failed. At this moment, further correction adjustment needs to be performed on a transmission adjustment parameter based on the motion trajectory fitting adjustment module 9, the motion direction fitting adjustment module 10, the motion rate adaptation adjustment module 11, the motion time delay compensation module 12, and the movement guidance module 13, until successful transmission and receiving are achieved. If the two-way communication system is used, it indicates that the acknowledgement signal returned by the satellite is not received due to the weak received signal. The receiving antenna parameters of the motion trajectory fitting adjustment module 9, motion direction fitting adjustment module 10, motion rate adaptation adjustment module 11, motion time delay compensation module 12, and movement guidance module 13 need to be corrected for secondary correction adjustment, and the closed-loop correction module stops operating until an effective acknowledgement signal is received.

It is to be noted that, each of the above modules may be implemented by software or hardware. For the latter, it may be implemented in the following manners, but is not limited to the follow: the above modules are all located in a same processor; or the above modules are located in different processors in any combination.

The embodiments of the present disclosure further provide a mobile terminal. The mobile terminal includes the above apparatus for adjusting satellite communication.

An embodiment of the present disclosure further provides a computer-readable storage medium. The computer-readable storage medium stores a computer program. Steps in any one of the above method embodiments are executed when the computer program is configured to operate.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

The embodiments of the present disclosure further provide a mobile terminal. The mobile terminal includes a memory and a processor. The memory stores a computer program. The processor is configured to run the computer program to execute steps in any one of the above method embodiments.

In an exemplary embodiment, the above mobile terminal may further include a transmission device and an input/output device. The transmission device is connected to the processor. The input/output device is connected to the above processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present disclosure may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure are not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

## Claims

1. A method for adjusting satellite communication, wherein the method is applied to a mobile terminal and comprises:
acquiring a satellite communication parameter transmitted and received by a mobile terminal and movement state information of the mobile terminal;
adjusting a satellite communication performance parameter of the mobile terminal according to the satellite communication parameter and the movement state information, and obtaining a transmission and receiving success rate and/or satellite communication quality; and
performing closed-loop adjustment on the satellite communication performance parameter of the mobile terminal based on the transmission and receiving success rate and/or the satellite communication quality.

2. The method according to claim 1, wherein
the satellite communication parameter comprises at least one of the following: a carrier-to-noise ratio, maximum transmitting power, a transmission time interval value, a synchronization time, a satellite number, the number of satellite channels, the number of satellite beams, or a satellite acknowledgement parameter; and
the movement state information of the mobile terminal comprises at least one of the following: a movement rate, movement acceleration, a movement direction, latitude and longitude, or an inclination angle.

3. The method according to claim 1, wherein
the satellite communication performance parameter comprises at least one of the following: a parameter for a satellite transceiver antenna, a parameter for a satellite transceiver link front end, or a parameter for a satellite transceiver chip.

4. The method according to claim 2, wherein adjusting the satellite communication performance parameter of the mobile terminal according to the satellite communication parameter and the movement state information comprises:
acquiring a navigation path or real-time motion trajectory information of the mobile terminal according to the satellite communication parameter and the movement state information, performing slicing processing on the navigation path or the real-time motion trajectory information, and dividing same into different path trajectory segments; and
comparing the path trajectory segments with adjustment parameters in a data base to obtain corresponding adjustment parameters, so as to adjust at least one of the following performance parameters: a parameter for a satellite transceiver antenna, a parameter for a satellite transceiver link front end, or a parameter for a satellite transceiver chip, wherein a mapping relationship between the path trajectory segment and the adjustment parameter is preset in the data base.

5. The method according to claim 2, wherein adjusting the satellite communication performance parameter of the mobile terminal according to the satellite communication parameter and the movement state information further comprises:
acquiring a plurality of time delays between the mobile terminal and a communication satellite according to the satellite communication parameter and the movement state information, and respectively performing time delay compensation.

6. The method according to claim 2, wherein before adjusting the satellite communication performance parameter of the mobile terminal again, the method further comprises:
generating prompt information for adjustment according to the satellite communication parameter and the movement state information, wherein
prompt content comprises at least one of the following: a movement rate, movement acceleration, a movement direction, a movement trajectory, a satellite transmission and receiving interval, terminal pitch angle guidance, or terminal placement position guidance; and
a prompt manner comprises at least one of the following: vibration, color change, voice, or animation.

7. The method according to claim 2, wherein adjusting the satellite communication performance parameter of the mobile terminal according to the satellite communication parameter and the movement state information further comprises:
determining a relative rate between a movement rate of a communication satellite and the movement rate of the mobile terminal when confirming, based on the movement state information, that the movement rate of the mobile terminal is greater than a preset threshold;
determining a terminal satellite signal frequency offset value according to the relative rate; and
determining a satellite receiver demodulation frequency center value of the mobile terminal based on the terminal satellite signal frequency offset value, so as to adjust a parameter for a satellite transceiver chip.

8. The method according to claim 2, wherein adjusting the satellite communication performance parameter of the mobile terminal according to the satellite communication parameter and the movement state information further comprises:
matching different performance parameter adjustment manners according to different rate levels of the mobile terminal when determining, based on the movement state information, that the mobile terminal is in a variable speed state.

9. The method according to claim 8, further comprising:
acquiring adjustment results of different performance parameter adjustment manners, and
adjusting an angle of a satellite transceiver antenna if determining, based on the adjustment results, that the mobile terminal is unable to transmit and receive communication information.

10. The method according to claim 2, wherein adjusting the satellite communication performance parameter of the mobile terminal according to the satellite communication parameter and the movement state information further comprises:
acquiring an included angle relationship between the mobile terminal and a communication satellite according to the satellite communication parameter and the movement direction in the movement state information;
selecting an optimal satellite transceiver antenna based on the included angle relationship;
determining a direction adjustment value of a maximum gain radiation direction of the optimal satellite transceiver antenna; and
adjusting the maximum gain radiation direction based on the direction adjustment value.

11. A computer-readable storage medium, having a computer program stored therein, wherein the computer program, when being executed by a processor, to cause the processor to implement steps of the method according to any one of claims 1 to 10.

12. A mobile terminal, comprising a memory, a processor, and a computer program that is stored in the memory and executable by the processor, wherein the processor is configure to execute the computer program to implement steps of the method according to any one of claims 1 to 10.
